(19) **Europäisches Patentamt**

**European Patent Office**

**Office européen des brevets**

(11) **EP 1 134 272 A2**

(12) **EUROPÄISCHE PATENTANMELDUNG**

(43) Veröffentlichungstag:
**19.09.2001 Patentblatt 2001/38**

(51) Int Cl.[7]: **C10J 3/56**, C10J 3/66,
C10J 3/84, C10B 53/02,
C10B 57/18, F02C 3/28

(21) Anmeldenummer: **01105709.8**

(22) Anmeldetag: **07.03.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **07.03.2000 DE 10010358**

(71) Anmelder: **BSBG Bremer
Sonderabfallberatungsgesellschaft mbH
28195 Bremen (DE)**

(72) Erfinder: **Schütz, Wilfried, Dr.
27711 Osterholz-Scharmbeck (DE)**

(74) Vertreter: **von Ahsen, Erwin-Detlef, Dipl.-Ing. et al
Anwaltsbüro von Ahsen
Rechts- und Patentanwälte
Hans-Böckler-Strasse 1
28217 Bremen (DE)**

(54) **Verfahren und Vorrichtung zum Vergasen von brennbarem Material**

(57) Ziel beim Vergasen von brennbarem Material ist das Erzeugen eines Produktgases mit geringen Anteilen von langkettigen Kohlenwasserstoffen. Dies läßt sich mit einem zweistufigen Vergasungsverfahren erreichen, in dessen zweiter Stufe diese langkettigen Kohlenwasserstoffe bei hoher Temperatur zerstört werden.

Nachteilig bei dem bekannten Verfahren ist die geringe Ausbeute bei der Vergasung, weil in beiden Stufen jeweils durch teilweises Verbrennen des Materials geheizt wird. Zur Vermeidung dieser Nachteile wird nach dem erfindungsgemäßen Verfahren ein Teil der Reaktionsprodukte aus der zweiten Stufe der ersten Stufe zum Heizen wieder zugeführt.

Fig. 2

EP 1 134 272 A2

**Beschreibung**

Die Erfindung betrifft ein Verfahren zum Vergasen von brennbarem Material, bei dem das Material in einen ersten Reaktor zur Pyrolyse bei einer ersten Temperatur eingebracht wird die durch Zuführen von Energie erreicht wird, und bei dem die gasförmigen Pyrolyseprodukte des ersten Reaktors einem zweiten Reaktor zur anschließenden Reaktion bei einer zweiten höheren Temperatur zugeführt werden, die durch teilweise Oxidation der Pyrolyseprodukte des ersten Reaktors mittels Zuführen von Sauerstoff erreicht wird. Außerdem betrifft die Erfindung eine Vorrichtung zum Vergasen von brennbarem Material.

Ein solches Verfahren und eine solche Vorrichtung sind beispielsweise aus "Vergasungsverfahren für die Entsorgung von Abfällen", Herausgeber M. Born und R. Berghoff, Springer-VDI-Verlag GmbH, Düsseldorf 1998, Seiten 125 bis 128 bekannt.

Das Verfahren und die Vorrichtung der eingangs genannten Art lassen sich z. B. dann verwenden, wenn feste Primärenergieträger wie Kohle oder Holz in flüssige oder gasförmige Energieträger umgewandelt werden sollen. Es lassen sich damit aber auch Biomasse und biogene Reststoffe vergasen, wie sie beispielsweise im Klärschlamm vorliegen. Das dabei erzeugte Produktgas kann dann zur Energieerzeugung beispielsweise einem Blockheizkraftwerk zur motorischen Verbrennung zugeführt werden.

Bei dieser Verwendung sind hohe Anforderungen an die Qualität des Produktgases zu stellen. Insbesondere schließen hohe Anteile langkettiger Kohlenwasserstoffe, Öle und Teere eine direkte Verwendung im Motor aus. Aus diesem Grund ist meist eine aufwendige Reinigung der Produktgase erforderlich.

Die Anteile dieser langkettigen Kohlenwasserstoffe, Öle und Teere lassen sich durch ein Erhöhen der Vergasungstemperatur und durch die Zugabe von reaktiven Gasen, wie z. B. Sauerstoff oder Wasserstoff reduzieren. Bei hohen Vergasungstemperaturen kann es jedoch zu einem Überschreiten des Ascheschmelzpunktes kommen. In diesem Fall entsteht eine flüssige Schlacke, die zu Ablagerungen im Vergasungsreaktor führen und diesen regelrecht verkleben kann. Dadurch werden kurze Wartungsintervalle erforderlich.

Diese Probleme werden bei dem Verfahren und der Vorrichtung der eingangs genannten Art dadurch vermieden, daß das zu vergasende Material zunächst bei einer ersten Temperatur unterhalb des Ascheschmelzpunktes einer Pyrolyse unterzogen wird. Die verbleibenden festen Bestandteile werden danach abgetrennt, und anschließend erfolgt die Zerstörung der langkettigen Kohlenwasserstoffe, Öle und Teere in einer weiteren Reaktion bei einer zweiten höheren Temperatur. Die erste und die zweite höhere Temperatur werden jeweils durch Verbrennen eines Teils des Materials erreicht. Dabei geht allerdings ein beträchtlicher Teil des Produktgases für die spätere Nutzung verloren.

Das der Erfindung zugrundeliegende Problem ist es, ein Verfahren anzugeben, mit dem sich brennbares Material zu einem Produktgas hoher Qualität und insbesondere mit geringen Mengen langkettiger Kohlenwasserstoffe, Öle und Teere bei gleichzeitig hoher Energieeffizienz vergasen läßt.

Erfindungsgemäß wird das Problem dadurch gelöst, daß bei einem Verfahren der eingangs genannten Art die Pyrolyse in dem ersten Reaktor unter Sauerstoffabschluß erfolgt, und daß dem ersten Reaktor die Energie mittels Einbringen eines Teiles der gasförmigen Reaktionsprodukte des zweiten Reaktors zugeführt wird.

Die angegebene zweistufige Vergasung bewirkt dabei eine hohe Qualität der Produktgase und insbesondere geringe Mengen langkettiger Kohlenwasserstoffe, Öle und Teere. Gleichzeitig wird eine hohe Energieeffizienz dadurch erreicht, daß ein Teil der Reaktionsprodukte des zweiten Reaktors in einem Kreislauf in den ersten Reaktor zurückgeführt und dort zum Heizen verwendet wird. Nach einer kurzen Anfahrphase ist kein zusätzliches Heizen des ersten Reaktors erforderlich. So läßt sich ein Produktgas mit hohem Energieinhalt erzeugen. Die Energie des zum Erreichen der zweiten höheren Temperatur verbrannten Gases wird auf diese Weise weitgehend weiter verwendet.

Der zweite Reaktor kann durch ein Verbindungselement aus vorzugsweise feuerfestem Material zum Einbringen des Teiles der gasförmigen Reaktionsprodukte mit dem ersten Reaktor verbunden sein. Dadurch ergibt sich ein einfacher, kostengünstiger und stabiler Aufbau.

Es ist von besonderem Vorteil, wenn der erste Reaktor über dem zweiten Reaktor in einer gemeinsamen, mit feuerfestem Material ausgekleideten Reaktoranordnung angeordnet ist. Dadurch ergibt sich ein kompakter Aufbau, und insbesondere die Energieübertragung von dem zweiten Reaktor zu dem ersten Reaktor mittels Einbringen des Teiles der gasförmigen Reaktionsprodukte wird dadurch unterstützt.

Außerdem kann eine gemeinsame Gasströmung für beide Reaktoren genutzt werden.

Bei einer Weiterbildung der Erfindung liegt die erste Temperatur unterhalb des Ascheschmelzpunktes, vorzugsweise zwischen 600°C und 900°C, insbesondere 800°C, und die zweite Temperatur oberhalb des Ascheschmelzpunktes, vorzugsweise oberhalb 1000°C, insbesondere 1250°C. Die Verweilzeit wird dabei so eingestellt, daß eine weitgehend vollständige Vergasung bereits bei der ersten Temperatur erfolgt. Hierbei wird einerseits das Entstehen von Schlacke durch Schmelzen der Asche verhindert. Andererseits läßt sich so das Erzeugen von teerbildenden Gasanteilen gering halten. Bei der zweiten Temperatur lassen sich dann auch diese geringen teerbildenden Gasanteile umwandeln.

Es ist von Vorteil, wenn die Pyrolyse des Materials in mindestens einem Reaktor in einer Wirbelschicht erfolgt, vorzugsweise unter Verwendung von Kalksteinsplitt, insbesondere Dolomit, als Wirbelbettmaterial.. Dadurch läßt sich eine homogene Temperaturverteilung bei der Vergasung erreichen. Bei dem ersten Reaktor kann so ein lokales Überschreiten des Ascheschmelzpunktes vermieden werden. Bei dem zweiten Reaktor ergibt sich eine effiziente Beseitigung der langkettigen Kohlenwasserstoffe, Öle und Teere. Kalksteinsplitt, insbesondere Dolomit, kostengünstig zu beschaffen und hat gute Eigenschaften des Wirbelbettmaterials.

Eine andere Weiterbildung der Erfindung zeichnet sich dadurch aus, daß die Wärme des anderen Teils der Reaktionsprodukte des zweiten Reaktors in einem Wärmetauscher auf den dem zweiten Reaktor zugeführten Sauerstoff übertragen wird. Weil hierbei auch die Wärmeenergie des der Vorrichtung entnommenen Teils der Pyrolyseprodukte zurückgewonnen wird, läßt sich die Energie des zum Erreichen der zweiten höheren Temperatur verbrannten Gases besonders effizient nutzen.

Das Material kann dem ersten Reaktor mit einem Schneckenförderer, insbesondere einem Unterschubschneckenförderer, dessen Schnecke das Material vorzugsweise durch einen Versorgungskanal in den ersten Reaktor fördert, aus einem Vorrat zugeführt werden. Dadurch läßt sich die Materialzufuhr besonders einfach und wirkungsvoll sowie gleichzeitig kontinuierlich und exakt dosierbar gestalten. Außerdem läßt sich mit dem Versorgungskanal eine höhere Standzeit der Schnecke erreichen, weil diese nicht direkt mit der Reaktionszone in Verbindung steht.

Eine Ausführungsform zeichnet sich dadurch aus, daß die Strömung der Pyrolyseprodukte des ersten Reaktors in der Beruhigungszone einer Beruhigungskammer beruhigt wird. Dadurch wird der Austrag des Wirbelbettmaterials wirkungsvoll unterdrückt. Besonders wirkungsvoll läßt sich diese Beruhigungskammer gestalten, wenn sie eine Prallplatte hat.

Bei einer Weiterbildung der Erfindung werden die mit dem Gasstrom aus dem ersten Reaktor austretenden festen Bestandteile, insbesondere die nicht vergasten Reststoffe, durch Abtrennmittel abgetrennt. Weil dadurch verhindert wird, das nichtgasförmige Pyrolyseprodukte des ersten Reaktors in den zweiten Reaktor gelangen, kann sich keine flüssige Schlacke in dem zweiten Reaktor bilden. Dadurch lassen sich größere Wartungsintervalle erzielen.

Vorzugsweise haben die Abtrennmittel einen Zyklon. Dieser ist gut für die Abscheidung von Feststoffen und Aerosolen aus den gasförmigen Pyrolyseprodukten geeignet. Für große Vorrichtungen kann auch ein sogenannter Multizyklon verwendet werden.

Bei einer anderen Ausführungsform werden die gasförmigen Pyrolyseprodukte des ersten Reaktors dem zweiten Reaktor, vorzugsweise mit einem Verdichter, insbesondere bei im wesentlichen der ersten Temperatur, zugeführt, der vorzugsweise die für die Wirbelschichten erforderlichen Verwirbelungsenergien aufbringt. Mit diesem Verdichter lassen sich die auftretenden Druckverluste ausgleichen. Als Verdichter sollte ein leistungsregulierbarer Hochtemperatur-Turboverdichter verwendet werden. Dieser sollte so ausgebildet sein, daß er bei der ersten Temperatur betreibbar ist. In diesem Fall können die gasförmigen Pyrolyseprodukte aus dem ersten Reaktor direkt in den zweiten Reaktor geleitet werden. Auf diese Weise treten auch hier keine weiteren Wärmeverluste auf. Außerdem wird dadurch die Kondensation von Teeren in den gasförmigen Pyrolyseprodukten des ersten Reaktors beim Zuführen zum zweiten Reaktor verhindert..

Im folgenden wird ein Ausführungsbeispiel der Erfindung an Hand der Zeichnungen näher erläutert. Es zeigen:

Fig. 1    ein Blockschaltbild eines Verfahrens als Ausführungsbeispiel, und

Fig. 2    eine schematische Darstellung einer Vorrichtung nach dem Ausführungsbeispiel.

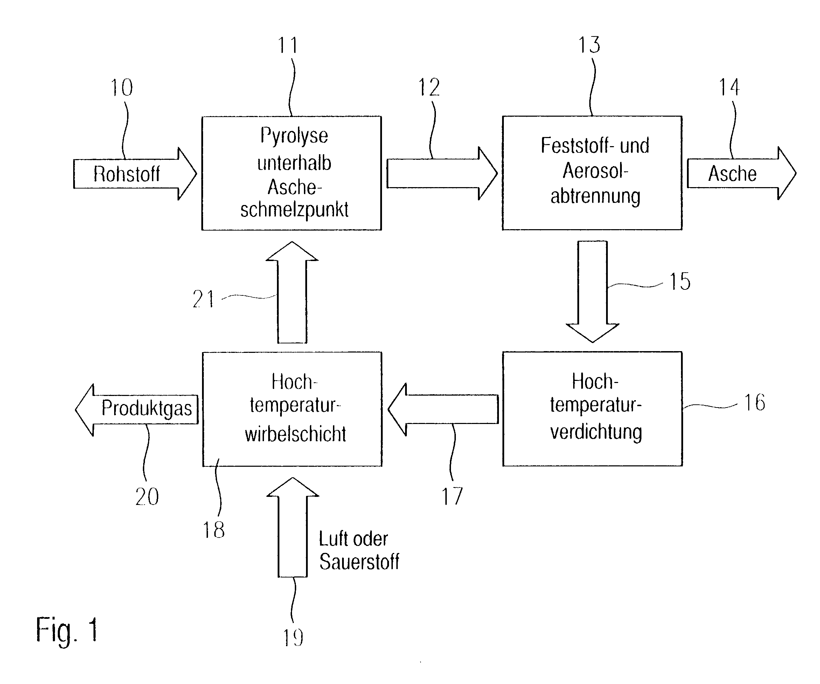

Fig. 1 zeigt das Blockschaltbild eines Verfahrens zum Vergasen brennbaren Materials. Wie bei 10 mit einem Pfeil angedeutet, werden die Rohstoffe zur Pyrolyse in einen ersten Reaktor 11 eingebracht. Im vorliegenden Fall werden als Rohstoffe Reststoffe mit ausreichend hohem Brennwert, Biomasse oder feste und flüssige, fossile Energieträger verwendet. Die Pyrolyse dieser Rohstoffe erfolgt in dem ersten Reaktor 11 bei einer Temperatur zwischen 600°C und 900°C in einer Wirbelschicht. Bei 12 werden die Pyrolyseprodukte des ersten Reaktors 11 in einen Zyklon 13 weitergeleitet. Der Zyklon 13 trennt die Feststoffe und Aerosole aus den Pyrolyseprodukten ab. Die Abtrennung dieser Partikel läßt sich durch den Zyklon 13 zwar nicht vollständig erreichen, jedoch läßt sich die Konzentration dieser Partikel soweit reduzieren, daß Ablagerungen und Verklebungen der folgenden Hochtemperaturstufe vermieden werden, die im folgenden noch näher beschrieben wird. Die von dem Zyklon abgetrennten Feststoffe und Aerosole, die im folgenden als Asche bezeichnet werden, werden bei 14 aus dem Prozeß entfernt.

Die verbleibenden gasförmigen Pyrolyseprodukte werden bei 15 einem Hochtemperaturverdichter 16 zugeführt. Der Hochtemperaturverdichter 16 verdichtet die gasförmigen Pyrolyseprodukte und leitet diese bei 17 in einen zweiten Reaktor 18 weiter. Außerdem wird, wie durch einen Pfeil 19 angedeutet, dem zweiten Reaktor 18 Luft oder Sauerstoff zum Verbrennen eines Teiles der darin befindlichen Gase zugeführt. Die Temperatur in dem zweiten Reaktor 18 wird dabei über die Menge zugegebenen Sauerstoffs geregelt. In dem zweiten Reaktor 18 erfolgt eine weitere Reaktion in einer Hochtemperaturwirbelschicht. Dabei beträgt die Temperatur in dem zweiten Reaktor 18 mehr als 1000°C. Bei dieser hohen Temperatur werden noch vorhandene langkettige Kohlenwasserstoffe, Öle und Teere zuverlässig gespalten.

Ein Teil der gasförmigen Reaktionsprodukte des zweiten Reaktors 18 wird, wie durch einen Pfeil 20 angedeutet, als Produktgas dem in Fig. 1 beschriebenen Kreislauf entnommen. Der übrige Teil der Reaktionsproduktgase mit der hohen Temperatur wird bei 21 in den ersten Reaktor 11 zurückgeführt. Durch das Zuführen dieser heißen Reaktionsproduktgase wird der erste Reaktor 11 auf seine Betriebstemperatur geheizt.

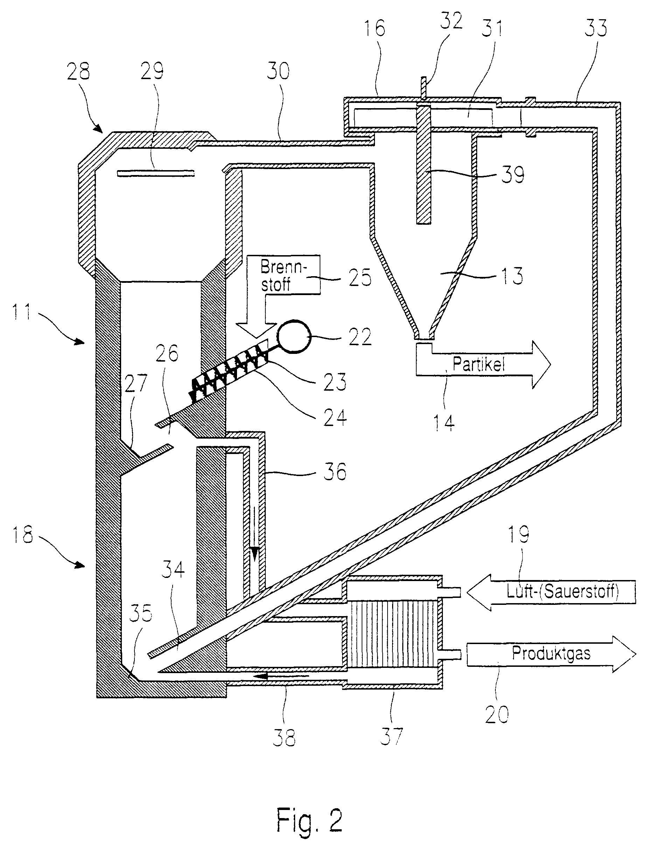

Fig. 2 zeigt eine Vorrichtung zum Vergasen von brennbarem Material als Ausführungsbeispiel der Erfindung. Der erste Reaktor 11 ist in seinem unteren Teil mit einem abrasionsbeständigen Feuerfestmaterial ausgekleidet. Als solches eignet sich z.B. siliziumgebundenes Siliziumcarbid. Zwischen diesem Feuerfestmaterial und der äußeren Stahlhülle des ersten Reaktors 11 ist eine Isolationsschicht aus Leichtstein mit geringer Wärmeleitfähigkeit vorgesehen. Der obere Teil des ersten Reaktors 11 hat eine Außenisolation. Dem ersten Reaktor 11 ist zur Zufuhr des Brennstoffs ein Unterschubschneckenförderer mit einem Motor 22 und einer Förderschnecke 23 zugeordnet. Die Förderschnecke 23 ist in einem Versorgungskanal 24 angeordnet und wird aus einem Brennstoffvorrat 25 versorgt.

Am unteren Ende des ersten Reaktors 11 ist ein Windkanal 26 angeordnet, dessen Austrittsöffnung einer Prallplatte 27 zugewandt ist. Der erste Reaktor 11 ist als Wirbelschichtreaktor ausgeführt. Nicht eingezeichnet ist in Fig. 2 das Wirbelbettmaterial. Als solches läßt sich beispielsweise Kalksteinsplitt, insbesondere Dolomit, verwenden, wie er zur Wirbelschichtverbrennung von Steinkohle verwendet wird. Die Körnung des Wirbelbettmaterials beträgt bei dem Ausführungsbeispiel 3mm.

In Fig. 2 ist der erste Reaktor 11 an seinem oberen Ende mit einer Beruhigungskammer 28 verbunden. Die Beruhigungskammer 28 hat eine Prallplatte 29 und ist mit einer Leitung 30 mit dem Zyklon 13 verbunden. Der Hochtemperaturverdichter 16 ist in Fig. 2 am oberen Ende des Zyklons 13 angeordnet und steht mit diesem durch ein Tauchrohr 39 in Verbindung. Der Zyklon 13 und der Hochtemperaturverdichter 16 sind bei dem Ausführungsbeispiel als eine Einheit ausgebildet. Bei dem in Fig. 2 gezeigten Ausführungsbeispiel ist der Hochtemperaturverdichter 16 als Radialverdichter mit einem in der Fig. horizontal angeordneten Verdichterrad 31 mit einer Welle 32 ausgeführt. Nicht in Fig. 2 dargestellt ist eine Kühlung für die Welle 32 und das ebenfalls in Fig. 2 nicht dargestellte Wellenlager.

Der Verdichter 16 ist mit einer Leitung 33 mit dem Einlaß des zweiten Reaktors 18 verbunden. Der zweite Reaktor 18 ist in seinem unteren Bereich ebenfalls mit einem abrasionsbeständigen Feuerfestmaterial ausgekleidet. Weniger belastete Stellen im oberen Bereich des zweiten Reaktors 18 sind mit carbongebundenen Steinen ausgestellt. Zwischen den mechanisch hoch belasteten Innenraumsteinen und seiner äußeren Stahlhülle hat der zweite Reaktor 18 ebenfalls eine Wärmedämmschicht aus Leichtstein.

Der Einlaß des zweiten Reaktors 18 ist als Windkanal 34 ausgeführt, dessen Austrittsende einer Prallplatte 35 zugewandt ist. Der zweite Reaktor 18 ist ebenfalls als Wirbelschichtreaktor ausgeführt. Als in der Fig. 2 nicht dargestelltes Wirbelbettmaterial wird bei dem zweiten Reaktor 18 ebenfalls Kalksteinsplitt, insbesondere Dolomit, verwendet. An seinem oberen Ende ist der zweite Reaktor 18 mit dem Windkanal 26 des ersten Reaktors 11 verbunden. Außerdem ist der zweite Reaktor 18 an seinem oberen Ende mit einer Leitung 36 mit einem Wärmetauscher 37 verbunden. An seinem unteren Ende ist der zweite Reaktor 18 mit einer Leitung 38 ebenfalls mit dem Wärmetauscher 37 verbunden.

Durch Drehen der Förderschnecke 23 mit dem Motor 22 wird bei dem in Fig. 2 gezeigten Ausführungsbeispiel ein Gemisch grobkörniger Steinkohle mit einem mittleren Durchmesser von etwa 6mm mit stichfestem Altfett im Verhältnis 1 : 1 aus dem Brennstoffvorrat 25 in den ersten Reaktor 11 eingebracht. Die Menge eingebrachten Brennstoffes läßt sich über die Motordrehzahl des Motors 22 einstellen. Durch den Windkanal strömt ein Heizgas, auf das später noch näher eingegangen wird, in den ersten Reaktor 11 und wird von der Prallplatte 27 in der Fig. 2 nach oben hin abgelenkt. Das einströmende Heizgas verwirbelt das Wirbelbettmaterial mit dem zugeführten Brennstoff. Dadurch wird in dem ersten Reaktor 11 eine zirkulierende Wirbelschicht erzeugt. Die Temperatur in dem ersten Reaktor 11 beträgt 800°C. Bei dieser Temperatur erfolgt die Pyrolyse des Brennstoffs. In der Wirbelschicht herrscht eine gleichmäßige Temperaturverteilung. Die große bereitgestellte Oberfläche in der Wirbelschicht führt zu einem schnellen Wärme- und Stoffumsatz. Die Temperatur in dem ersten Reaktor 11 kann abhängig von den Erfordernissen zwischen 600°C und 900°C betragen.

Das Heizgas besteht im wesentlichen aus den Gasen Stickstoff $N_2$, Kohlendioxid $CO_2$ und Kohlenmonoxid CO, Wasserstoff $H_2$ und Wasserdampf $H_2O$. Die Temperatur im ersten Reaktor 11 stellt sich als Mischtemperatur aus der Temperatur des Heizgases und der niedrigeren Temperatur des zugeführten Brennstoffes ein. Durch die Reaktion mit Kohlenmonoxid, Wasserstoff und Wasserdampf wird der Brennstoff zu verschiedenen Pyrolyseprodukten umgewandelt. Bei einem Kohlehydrat sind zum Beispiel folgende Reaktionen möglich:

$$(H\text{-}C\text{-}OH)_n + {}_nH_2 \rightarrow nCH_3OH$$

$$(H\text{-}C\text{-}OH)_n + nH_2O \rightarrow nCO_2 + 2nH_2$$

$$(H\text{-}C\text{-}OH)_n + nCO \rightarrow nCO_2 + (H\text{-}C\text{-}H)_n$$

Die Pyrolyseprodukte aus der Wirbelschicht expandieren in der Fig. 2 nach oben hin in die Beruhigungskammer 28. Dabei verhindert die Prallplatte 29, daß größere Mengen mitgerissener Partikel aus der Wirbelschicht direkt in die Leitung 30 geraten. Durch die Leitung 30 gelangen die Pyrolyseprodukte in den Zyklon 13. Die mitgeführten Feststoffe, das heißt Asche und Aerosol, lassen sich in dem Zyklon 13 zu mehr als 98 % abtrennen. Diese sammeln sich in dem konisch gestalteten unteren Teil des Zyklons 13 und werden, wie dieses in Fig. 2 durch den Pfeil 14 angedeutet ist, dem System entnommen. Dabei können die abgetrennten Feststoffe in einem Auffangbehälter gesammelt werden, der dann regelmäßig geleert werden muß. Am unteren Ende des Zyklons 13 kann auch eine sogenannte Zellradschleuse vorgesehen sein, durch die sich die abgetrennten Feststoffe sicher aus dem Zyklon 13 entfernen lassen.

Auch wenn in der Fig. 2 nur ein Zyklon 13 gezeigt ist, können für sehr große Volumenströme mehrere Zyklone als sogenannter Multizyklon parallel arbeiten. Dadurch lassen sich die Nachteile großer Zyklone vermeiden.

Die nahezu partikelfreien Pyrolysegase gelangen durch das Tauchrohr 39 aus dem Zyklon 13 in den Hochtemperaturverdichter 16. Der Hochdruckverdichter 16 dient zum Ausgleichen der Druckverluste im System. Es kann in dem dargestellten System sowohl niedriger als auch höherer Druck als Atmosphärendruck herrschen. Unter typischen Betriebsbedingungen werden die partikelfreien Pyrolysegase durch das Verdichterrad 31 von einem Druck von etwa 0,76 bar auf einen Druck von etwa 0,98 bar verdichtet. Mit dem Hochtemperaturverdichter 16 wird somit bei dem abgebildeten System die Wirbelenergie für die Wirbelschichten beider Reaktoren 11, 18 aufgebracht. Die so verdichteten Pyrolysegase gelangen dann durch die Leitung 33 in den zweiten Reaktor 18. Die verdichteten Pyrolysegase gelangen durch den Windkanal 34 zu der Prallplatte 35 und werden dort nach oben hin in Fig. 2 abgelenkt. Dabei wird in dem zweiten Reaktor 18, ähnlich wie in dem ersten Reaktor 11, eine Wirbelschicht erzeugt. Weil die Asche bereits mit dem Zyklon 13 entfernt worden ist, kann sie das Wirbelbettmaterial des zweiten Reaktors 18 nicht verkleben.

Durch die Leitung 38 wird dem zweiten Reaktor 18 außerdem Sauerstoff in Form von vorgeheizter atmosphärischer Luft zugeführt. Dadurch wird ein Teil des durch den Windkanal 34 einströmenden heißen Pyrolysegases verbrannt, wodurch die Temperatur in dem zweiten Reaktor 18 ansteigt. Durch die Menge zugegebener Luft wird die Temperatur in dem zweiten Reaktor 18 auf einen Wert von 1250°C gebracht. Durch das zirkulierende Wirbelbett in dem zweiten Reaktor 18 herrscht eine sehr gleichmäßige Temperaturverteilung. Insbesondere werden sogenannte kalte Strähnen vermieden. Dadurch werden praktisch alle verbliebenen langkettigen Kohlenwasserstoffe, Öle und Teere in dem zweiten Reaktor 18 sicher zerstört. Im oberen Teil des zweiten Reaktors 18 werden diesem etwa 25 % des Gasstromes entnommen und mittels der Leitung 36 dem Wärmetauscher 37 zugeführt. In dem Wärmetauscher 37 gibt dieser Teil des Gases seine Wärmeenergie im Gegenstrom zum Vorheizen an die Luft 19 ab und wird als Produktgas 20 der in Fig. 2 gezeigten Vorrichtung entnommen. Dabei wird das Produktgas 20 auf eine Temperatur von etwa 500°C abgekühlt und die Luft 19 auf eine Temperatur von 800°C vorgeheizt. Im weiteren Verlauf wird das Produktgas unter Wärmerückgewinnung, beispielsweise für ein Blockheizkraftwerk, weiter abgekühlt und mit Hilfe eines in der Fig. 2 nicht dargestellten Staubfilters von Staub befreit. Anschließend kann das Produktgas, direkt mit Erdgas gemischt, dem Motor des Blockheizkraftwerks zugeführt oder für eine spätere Verwendung gespeichert werden.

Die verbleibenden 75 % des aus dem zweiten Reaktor 18 austretenden Gases gelangen durch den Windkanal 26 als Heizgas in den ersten Reaktor 11. Sie geben dabei ihre Wärmeenergie an das kalte Altfett und die Kohle ab. Die in dem Heizgas enthaltenen Gase Kohlenmonoxid und Wasserdampf dienen dabei gleichzeitig als Vergasungsmittel.

Die sogenannte partielle Oxydation des zugeführten Gases in dem zweiten Reaktor 18 kann auch in einem üblichen Gasreaktor erfolgen. Die Ausgestaltung dieses zweiten Reaktors 18 als Wirbelschichtreaktor ist demgegenüber etwas aufwendiger. Dafür ergibt sich in der Wirbelschicht aber eine wesentlich bessere Durchmischung der Gase und eine gleichmäßigere Temperaturverteilung. Gleichzeitig wird den Gasen in dieser Wirbelschicht eine große reaktionsbegünstigende Oberfläche zur Verfügung gestellt, die durch katalytische Wirkung die Reaktionen in dem zweiten Reaktor 18 beschleunigt. Durch die Masse des Wirbelbettmaterials mit seiner vergleichsweise großen Wärmekapazität wird eine große Menge Wärmeenergie bereitgehalten. Kurzfristige Schwankungen im Brennwert des dem zweiten Reaktor zugeführten Pyrolysegases haben somit nur einen geringen Einfluß auf die Vergasungsprozesse in der in Fig. 2 gezeigten Vorrichtung.

Ein zusätzliches Heizen der in Fig. 2 gezeigten Vorrichtung ist lediglich zum Anfahren der Vergasung erforderlich. Nachdem die Vergasung einmal in Gang gekommen ist, kann sie im folgenden stabil und zuverlässig ohne weitere Wärmezufuhr von außen betrieben werden. Zum Anfahren läßt sich mit einem gewöhnlichen Gasbrenner das Wirbelbettmaterial der beiden Reaktoren 11, 18 sowie deren jeweilige Ausmauerung auf die jeweilige Betriebstemperatur erhitzen. Wenn dann anschließend der Brennstoff mit der Förderschnecke 23 in den ersten Reaktor 11 eingebracht wird, läuft das Verfahren ohne weitere Wärmezufuhr von außen weiter. Auf diese Weise lassen sich die sonst üblichen langen Anfahrzeiten von Vergasungsanlagen mit den dabei entstehenden hohen Teergehalten erheblich verkürzen oder sogar ganz vermeiden.

**Bezugszeichenliste:**

| | |
|---|---|
| 10 | Rohstoffzufuhr |
| 11 | erster Reaktor |
| 12 | Pyrolyseprodukte |
| 13 | Zyklon |
| 14 | Asche |
| 15 | Pyrolyseprodukte |
| 16 | Hochtemperaturverdichter |
| 17 | Pyrolyseprodukte |
| 18 | zweiter Reaktor |
| 19 | Luft |
| 20 | Produktgas |
| 21 | Pyrolyseprodukte |
| 22 | Motor |
| 23 | Förderschnecke |
| 24 | Versorgungskanal |
| 25 | Brennstoffvorrat |
| 26 | Windkanal |
| 27 | Prallplatte |
| 28 | Beruhigungskammer |
| 29 | Prallplatte |
| 30 | Leitung |
| 31 | Verdichterrad |
| 32 | Welle |
| 33 | Leitung |
| 34 | Windkanal |
| 35 | Prallplatte |
| 36 | Leitung |
| 37 | Wärmetauscher |
| 38 | Leitung |
| 39 | Tauchrohr |

**Patentansprüche**

1. Verfahren zum Vergasen von brennbarem Material, bei dem das Material in einen ersten Reaktor (11) zur Pyrolyse bei einer ersten Temperatur eingebracht wird, die durch Zuführen von Energie erreicht wird, und bei dem die gasförmigen Pyrolyseprodukte des ersten Reaktors (11) einem zweiten Reaktor (18) zur anschließenden Reaktion bei einer zweiten höheren Temperatur zugeführt werden, die durch teilweise Oxidation der Pyrolyseprodukte des ersten Reaktors (11) mittels Zuführen von Sauerstoff erreicht wird, **dadurch gekennzeichnet**, daß die Pyrolyse in dem ersten Reaktor (11) unter Sauerstoffabschluß erfolgt, und daß dem ersten Reaktor (11) die Energie mittels Einbringen eines Teiles der gasförmigen Reaktionsprodukte des zweiten Reaktors (18) zugeführt wird.

2. Verfahren nach Anspruch 1, **dadurch gekennzeichnet, daß** die erste Temperatur unterhalb des Ascheschmelzpunktes liegt, vorzugsweise zwischen 600°C und 900°C, insbesondere 800°C, und daß die zweite Temperatur im Bereich der Zerstörung der langkettigen Kohlenwasserstoffe liegt, vorzugsweise oberhalb von 1000°C, insbesondere 1250°C.

3. Verfahren nach Anspruch 1 oder 2, **dadurch gekennzeichnet, daß** die Pyrolyse in dem ersten Reaktor (11) und/oder die Reaktion in dem zweiten Reaktor (18) in einer Wirbelschicht erfolgt, vorzugsweise unter Verwendung von Kalksteinsplitt, insbesondere Dolomit, als Wirbelbettmaterial.

4. Verfahren nach einem der vorhergehenden Ansprüche, **dadurch gekennzeichnet, daß** die Wärme des anderen Teils der Reaktionsprodukte des zweiten Reaktors (18) in einem Wärmetauscher (37) auf den dem zweiten Reaktor (18) zugeführten Sauerstoff (19) übertragen wird.

5. Verfahren nach einem der vorhergehenden Ansprüche, **dadurch gekennzeichnet, daß** das Material dem ersten Reaktor (11) mit einem Schneckenförderer, insbesondere einem Unterschubschneckenförderer, deren Schnecke (23) das Material vorzugsweise durch einen Versorgungskanal (24) in den ersten Reaktor (11) fördert, aus einem Vorrat (25) zugeführt wird.

6. Verfahren nach einem der vorhergehenden Ansprüche, **dadurch gekennzeichnet, daß** dem ersten Reaktor (11) zum Beruhigen des aus diesem austretenden Gasstroms eine Beruhigungskammer (28) nachgeschaltet ist.

7. Verfahren nach einem der vorhergehenden Ansprüche, **dadurch gekennzeichnet, daß** die mit dem Gasstrom aus dem ersten Reaktor (11) austretenden festen Bestandteile, insbesondere die nicht vergasten Reststoffe, durch Abtrennmittel (13) abgetrennt werden.

8. Verfahren nach einem der vorhergehenden Ansprüche, **dadurch gekennzeichnet, daß** die gasförmigen Pyrolyseprodukte des ersten Reaktors (11) dem zweiten Reaktor (18), vorzugsweise mit einem Verdichter (16), insbesondere bei im wesentlichen der ersten Temperatur, zugeführt werden, der vorzugsweise die für die Wirbelschichten erforderlichen Verwirbelungsenergien aufbringt.

9. Vorrichtung zum Vergasen von brennbarem Material, mit einem ersten Reaktor (11) zur Pyrolyse des darin eingebrachten Materials bei einer ersten, mittels Zufuhr von Energie erreichten Temperatur, und mit einem zweiten Reaktor (18) zur anschließenden Reaktion der gasförmigen Pyrolyseprodukte des ersten Reaktors (11) bei einer zweiten höheren Temperatur durch deren teilweise Oxidation mittels Zuführen von Sauerstoff (19), **dadurch gekennzeichnet**, daß der erste Reaktor (11) zur Pyrolyse unter Sauerstoffabschluß ausgelegt ist, und daß die Energie dem ersten Reaktor (11) mittels Einbringen eines Teiles der gasförmigen Reaktionsprodukte des zweiten Reaktors (18) zuführbar ist.

10. Vorrichtung nach Anspruch 9, **dadurch gekennzeichnet, daß** der zweite Reaktor (18) durch ein Verbindungselement (26) aus vorzugsweise feuerfestem Material zum Einbringen des Teiles der gasförmigen Reaktionsprodukte mit dem ersten Reaktor (11) verbunden ist.

11. Vorrichtung nach Anspruch 9 oder 10, **dadurch gekennzeichnet, daß** der erste Reaktor (11) über dem zweiten Reaktor (18) in einer gemeinsamen, mit feuerfestem Material ausgekleideten Reaktoranordnung angeordnet sind.

12. Vorrichtung nach einem der Ansprüche 9 bis 11, **dadurch gekennzeichnet, daß** der andere Teil der Reaktionsprodukte des zweiten Reaktors (18) zum Übertragen von deren Wärme auf den dem zweiten Reaktor (18) zugeführten Sauerstoff einem Wärmetauscher (37) zuführbar ist.

13. Vorrichtung nach einem der Ansprüche 9 bis 12, **dadurch gekennzeichnet, daß** dem ersten Reaktor (11) zum Beruhigen der Strömung seiner Pyrolyseprodukte eine Beruhigungskammer (28) nachgeschaltet ist, die vorzugsweise eine Prallplatte (29) hat.

14. Vorrichtung nach einem der Ansprüche 9 bis 13, **dadurch gekennzeichnet, daß** die gasförmigen Pyrolyseprodukte des ersten Reaktors (11), vorzugsweise mit der ersten Temperatur, dem zweiten Reaktor (18) mittels eines Verdichters (16), vorzugsweise einem leistungsregulierbaren Hochtemperatur-Turboverdichter, insbesondere zum Bereitstellen der für die Wirbelschichten erforderlichen Verwirbelungsenergien, zuführbar sind.

Fig. 1

EP 1 134 272 A2

Fig. 2